# EUROPEAN PATENT APPLICATION

(11) **EP 2 120 458 A1**
(43) Date of publication of application: **18.11.2009**
(21) Application number: 08720349.3
(22) Date of filing: 06.03.2008
(51) Int. Cl.: H04N 7/18, H04M 11/00, H04N 7/16

(54) **MONITORING UNIT CONTROL SYSTEM**

(30) Priority: 17.04.2007 JP 2007108588
(71) Applicant: Panasonic Corporation, Kadoma-shi Osaka 571-8501 (JP)
(72) Inventor: TSUZUKI, Kazuhisa, Osaka-shi, Osaka 540-6207 (JP); SHIMIZU, Toshihiro, Osaka-shi, Osaka 540-6207 (JP)
(74) Representative: Kügele, Bernhard
(86) International application number: PCT/JP2008/000463
(87) International publication number: WO 2008/129765

(57) **Abstract**

A surveillance device control system is provided which can continue the system operation between a control terminal and a surveillance device even if an authentication server has gone down and cannot authenticate the control terminal to give it access permission. In the surveillance device control system (1000), the control terminal (200) sends a control request with a ticket as access permission information to the surveillance device (300) if the control terminal (200) has successfully acquired the ticket from the authentication server (100), and sends the control request without the ticket to the surveillance device (300) if the control terminal (200) has failed to acquired the ticket. The surveillance device (300) operates depending on the control request from the control terminal (200) and, when the surveillance device (300) receives the control request without the ticket, the surveillance device (300) performs a device operation within a limited scope of device operations as compared to when it receives the control request with the ticket.

## Description

### TECHNICAL FIELD

The present invention relates to a surveillance device control system (a monitoring unit control system) having a surveillance device (a monitoring unit) such as a network camera, a control terminal for controlling the surveillance device, and an authentication server for determining whether the control terminal is authorized to access the surveillance device or not.

### BACKGROUND ART

Conventionally, surveillance device control systems are known which can remotely operate a surveillance device, such as a network camera, using a control terminal. Such a surveillance device control system may be provided with an authentication server in addition to the control terminal and the surveillance device. In this case, the authentication server centrally manages access control for the control terminal.

The authentication server receives from the control terminal a request for accessing the surveillance device, and determines whether the control terminal is authorized to access. If the authentication results in access permission, the authentication server notifies the surveillance device of the control request received from the control terminal. The control terminal therefore cannot access the surveillance device unless permitted to access in the authentication made by the authentication server. In this way, in the conventional surveillance device control system, the authentication server would centrally manage access control for the control terminal, allowing a high-security system to be constructed.

For example, Japanese Patent Laid-Open Application No. 2002-204486 has been disclosed a conventional surveillance device control system that can remotely operate a surveillance device.

In the conventional surveillance device control system, however, access control for the control terminal is centrally managed by the authentication server as described above. For this reason, in case of something unexpected, such as the authentication server functionally going down, the authentication server cannot perform the access control for the control terminal. As a result, the control terminal becomes unable to access the surveillance device at all, and the whole operation of the system stops. The system operation can be started again by restarting the authentication server. However, this would require a stop of the whole operation of the system for a certain period of time. The authentication server can also be duplexed in order to avoid the stop of the whole system operation. But, this would require higher spending on system equipment.

### DISCLOSURE OF THE INVENTION

### Problems to be solved by the invention

The invention has been made in the above-mentioned background. A purpose of the invention is to provide a surveillance device control system that can continue the system operation between the control terminal and the surveillance device even if the authentication server has gone down and cannot authenticate the control terminal to give it access permission.

### Means for solving the problems

The invention is a surveillance device control system having a surveillance device, a control terminal for controlling the surveillance device, and an authentication server for determining whether the control terminal is authorized to access the surveillance device or not, the control terminal having: an access permission acquisition unit for making an access permission request to the authentication server for permission for the control terminal to access the surveillance device, and acquiring access permission information from the authentication server if the authentication server determines that the control terminal is authorized to access; and a control request unit for sending a control request with the access permission information to the surveillance device if the access permission acquisition unit has successfully acquired the access permission information, and sending the control request without the access permission information to the surveillance device if the access permission acquisition unit has failed to acquire the access permission information, the surveillance device having: a control request reception unit for receiving the control request from the control request unit, and determining the presence or absence of the access permission information; and a device operation performance (execution) unit for performing (executing) a device operation depending on the control request, wherein if the control request reception unit receives the control request without the access permission information, the device operation performance unit performs the device operation within a limited scope (range) of device operations as compared to when the control request reception unit receives the control request with the access permission information.

In this configuration, the control terminal sends a control request with the access permission information to the surveillance device if the control terminal has successfully acquired the access permission information, and sends the control request without the access permission information to the surveillance device if the control terminal has failed to acquire the access permission information. If the surveillance device receives the control request without the access permission information, the surveillance device performs the device operation within a limited scope (range) of device operations as compared to when the surveillance device receives the control request with the access permission information. Consequently, even if the authentication server has gone down and the control terminal cannot be connected to the authentication server and cannot acquire the access permission information from the authentication server, the surveillance device can receive the control request from the control terminal and perform the device operation within a limited scope of device operations. As a result, the system operation can be continued between the control terminal and the surveillance device even if the authentication server has gone down and cannot authenticate the control terminal to give it access permission.

In the surveillance device control system of the invention, the surveillance device may have: an authentication server existence query unit for querying about the existence of the authentication server; and a status setting unit for setting a status to an authentication server present state or an authentication server absent state, based on a result of the determination made by the control request reception unit on the presence or absence of the access permission information, and on a result of the query made by the authentication server existence query unit about the existence of the authentication server, and the device operation performance unit may change the scope of device operations depending on the presence or absence of the access permission information and on the status of the existence of the authentication server set by the status setting unit.

In this configuration, using the result of the query about the existence of the authentication server in addition to the presence or absence of the access permission information in the control request, the surveillance device can reliably set the status of the existence of the authentication server and change the scope of device operations depending on the presence or absence of the authentication server.

In the surveillance device control system of the invention, if the status is set to the authentication server absent state by the status setting unit, the device operation performance unit may perform the device operation within a limited scope of device operations as compared to when the status is set to the authentication server present state by the status setting unit. This configuration allows the surveillance device to be suitably operated depending on the presence or absence of the authentication server in addition to the presence or absence of the access permission information in the control request.

In the surveillance device control system of the invention, if the presence or absence of the access permission information in the control request differs from the presence or absence of the authentication server in the status setting, the status setting unit may update the status setting depending on a result of a query about the existence of the authentication server, and the device operation performance unit may perform the device operation within the scope of device operations that depends on the presence or absence of the access permission information and the updated status setting.

This configuration allows the setting of the status of the existence of the authentication server to be accurately reset according to the actual state to prevent a contradiction between the setting of the status of the existence of the authentication server and the result of the determination of the presence or absence of the access permission information, so that the system operation can be continued between the control terminal and the surveillance device.

In the surveillance device control system of the invention, if the control request reception unit receives the control request without the access permission information when the status is set to the authentication server present state by the status setting unit, the authentication server existence query unit may query about the existence of the authentication server and the status setting unit may update the status setting depending on a result of the query made by the authentication server existence query unit about the existence of the authentication server.

In this configuration, if the control request is received without the access permission information when the status is set to the authentication server present state, the existence of the authentication server is queried about, and then the setting of the status of the existence of the authentication server is updated depending on the result of the query. This allows the setting of the status of the existence of the authentication server to be accurately reset according to the actual state to prevent a contradiction between the setting of the status of the existence of the authentication server and the result of the determination of the presence or absence of the access permission information, so that the system operation can be continued between the control terminal and the surveillance device.

In the surveillance device control system of the invention, if the result of the query made by the authentication server existence query unit indicates the presence of the authentication server, the surveillance device may invalidate the control request. This configuration allows an unauthorized control request to be suitably handled. That is, suppose that the control terminal arbitrarily makes a control request to the surveillance device though the control terminal does not have the access permission information, when the status is set to the authentication server present state. In this case, the above-described configuration allows the surveillance device side to invalidate the control request. Consequently, an unauthorized control request based on so-called spoofing can be invalidated.

In the surveillance device control system of the invention, if the control request reception unit receives the control request with the access permission information when the status is set to the authentication server absent state by the status setting unit, the authentication server existence query unit may query about the existence of the authentication server and the status setting unit may update the status setting depending on a result of the query made by the authentication server existence query unit about the existence of the authentication server.

In this configuration, if the control request is received with the access permission information when the status is set to the authentication server absent state, the existence of the authentication server is queried about, and then the setting of the status of the existence of the authentication server is updated depending on the result of the query. This allows the setting of the status of the existence of the authentication server to be accurately reset according to the actual state to prevent a contradiction between the setting of the status of the existence of the authentication server and the result of the determination of the presence or absence of the access permission information, so that the system operation can be continued between the control terminal and the surveillance device.

In the surveillance device control system of the invention, the control terminal may have an access history storage unit for storing history information on accessing the surveillance device, and if the access permission acquisition unit has failed to acquire the access permission information, the control request unit may send the control request to the surveillance device based on the access history information.

In this configuration, the control terminal has the access history storage unit for storing history information on accessing the surveillance device. If the control terminal has failed to acquire the access permission information from the authentication server, the control terminal sends the control request to the surveillance device based on the access history information. Consequently, even if the authentication server has gone down and the control terminal cannot be connected to the authentication server and cannot obtain the address of the surveillance device from the authentication server, the control terminal can use the address in the access history information to send the control request to the surveillance device. The system operation can be continued between the control terminal and the surveillance device even if the authentication server has gone down and cannot authenticate the control terminal to give it access permission.

Another aspect of the invention is a control terminal provided to be able to be connected to a surveillance device to be controlled and an authentication server for determining whether the control terminal is authorized to access the surveillance device or not, the control terminal having: an access permission acquisition unit for making an access permission request to the authentication server for permission for the control terminal to access the surveillance device, and acquiring access permission information from the authentication server if the authentication server determines that the control terminal is authorized to access; and a control request unit for sending a control request with the access permission information to the surveillance device if the access permission acquisition unit has successfully acquired the access permission information, and sending the control request without the access permission information to the surveillance device if the access permission acquisition unit has failed to acquire the access permission information.

Also in this configuration, as in the case of the above-described aspects of the invention, the system operation can be continued between the control terminal and the surveillance device even if the authentication server has gone down and cannot authenticate the control terminal to give it access permission.

Another aspect of the invention is a surveillance device provided to be able to be connected to a control terminal and an authentication server for determining whether the control terminal is authorized to access the surveillance device or not and sending access permission information to the control terminal if the authentication server determines that the control terminal is authorized to access, the surveillance device having: a control request reception unit for receiving a control request from the control terminal, and determining the presence or absence of the access permission information; and a device operation performance unit for performing a device operation depending on the control request, wherein the control request reception unit receives the control request with the access permission information if the control terminal has successfully acquired the access permission information, and receives the control request without the access permission information if the control terminal has failed to acquire the access permission information, and wherein if the control request reception unit receives the control request without the access permission information, the device operation performance unit performs the device operation within a limited scope of device operations as compared to when the control request reception unit receives the control request with the access permission information.

Also in this configuration, as in the case of the above-described aspects of the invention, the system operation can be continued between the control terminal and the surveillance device even if the authentication server has gone down and cannot authenticate the control terminal to give it access permission.

Another aspect of the invention is a control method for a surveillance device control system having a surveillance device, a control terminal for controlling the surveillance device, and an authentication server for determining whether the control terminal is authorized to access the surveillance device or not, the control method comprising the steps of: the control terminal making an access permission request to the authentication server for permission for the control terminal to access the surveillance device; causing the control terminal to acquire access permission information from the authentication server if the authentication server determines that the control terminal is authorized to access; the control terminal sending a control request with the access permission information to the surveillance device if the control terminal has successfully acquired the access permission information, and sending the control request without the access permission information to the surveillance device if the control terminal has failed to acquire the access permission information; the surveillance device determining the presence or absence of the access permission information when the surveillance device receives the control request from the control terminal; and the surveillance device performing a device operation depending on the control request, wherein when the surveillance device performs the device operation, if the surveillance device receives the control request without the access permission information, the surveillance device performs the device operation within a limited scope of device operations as compared to when the surveillance device receives the control request with the access permission information.

Also in this method, as in the case of the above-described aspects of the invention, the system operation can be continued between the control terminal and the surveillance device even if the authentication server has gone down and cannot authenticate the control terminal to give it access permission.

### Advantages of the invention

In the invention, the control terminal sends the control request without the access permission information to the surveillance device even if the control terminal has failed to acquire the access permission information from the authentication server. If the surveillance device receives the control request without the access permission information, the surveillance device performs the device operation within a limited scope of device operations as compared to when the surveillance device receives the control request with the access permission information. Provided with such a configuration, the surveillance device control system can be provided which has an advantage of being able to continue the system operation even if the authentication server has gone down and cannot authenticate the control terminal to give it access permission.

As described hereafter, other aspects of the invention exist. Thus, this summary of the invention is intended to provide a few aspects of the invention and is not intended to limit the scope of the invention described and claimed herein.

### BRIEF DESCRIPTION OF THE DRAWINGS

Figure 1 shows the whole of a surveillance device control system of an embodiment of the invention;
Figure 2 shows a configuration of an authentication server in the embodiment of the invention;
Figure 3 shows a configuration of a control terminal in the embodiment of the invention;
Figure 4 shows a configuration of a surveillance device in the embodiment of the invention;
Figure 5 shows an example of access permission level settings;
Figure 6 shows an example of information stored in a control terminal ID/password storage unit;
Figure 7 shows an example of information stored in an access permission information storage unit;
Figure 8 shows an example of information stored in the access permission information storage unit;
Figure 9 shows an example of information stored in an access history storage unit;
Figure 10 is a flowchart of an operation of the control terminal in the embodiment of the invention;
Figure 11 is a flowchart of an operation of the surveillance device in the embodiment of the invention; and
Figure 12 is a flowchart of an operation of the surveillance device in the embodiment of the invention.

### DESCRIPTION OF THE SYMBOLS

100: Authentication server
110: Control terminal authentication unit
120: Ticket issuing unit
130: Authentication server existence query response unit
150: Storage unit
151: Control terminal ID/password storage unit
152: Access permission information storage unit
200: Control terminal
210: Access permission acquisition unit
220: Control request unit
242: Access history storage unit
300: Surveillance device
310: Control request reception unit
311: Ticket existence determination unit
320: Authentication server existence query and determination unit
330: Status setting unit
340: Device operation performance unit
341: Access permission level determination unit
360: Storage unit
361: Access permission scope information storage unit
1000: Surveillance device control system

### BEST MODE OF EMBODYING THE INVENTION

The present invention will be described below in detail. The following detailed description and the accompanying drawings do not limit the invention. Instead, the scope of the invention is defined by the appended claims.

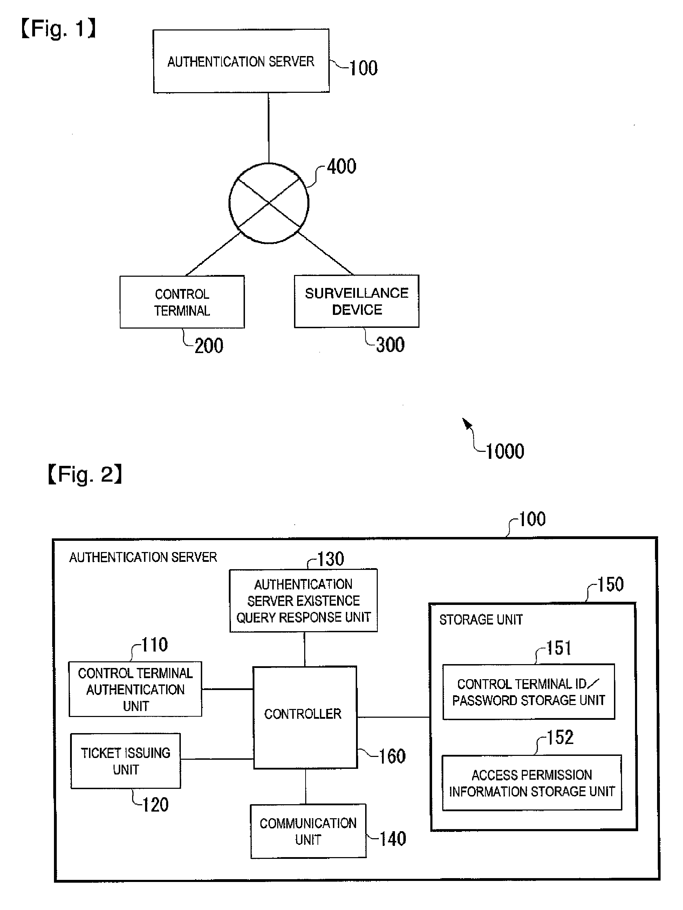

Figures 1 to 4 show a configuration of a surveillance device control system in an embodiment of the invention. Figure 1 shows the whole of the surveillance device control system, and Figures 2 to 4 show detailed configurations of each of the parts comprising the surveillance device control system 1000.

As shown in Figure 1, the surveillance device control system 1000 according to the embodiment comprises an authentication server 100, a control terminal 200, and a surveillance device 300 which are connected to one another via a network 400. The surveillance device 300 is a network camera or other device for monitoring movements or the like of a person and object. The surveillance device 300 is controlled by the control terminal 200 via the network 400. The authentication server 100 determines whether the control terminal 200 is authorized to access the surveillance device 300 or not. One control terminal 200 and one surveillance device 300 are shown in Figure 1 but, in practice, a plurality of control terminals 200 and a plurality of surveillance devices 300 may be connected to the network 400. In addition, any control terminal 200 may control any surveillance device 300. Configurations of the authentication server 100, control terminal 200, and surveillance device 300 will next be described in detail with reference to the drawings.

First, a configuration of the authentication server 100 will be described with reference to Figure 2. As shown in Figure 2, the authentication server 100 comprises a control terminal authentication unit 110, a ticket issuing unit 120, an authentication server existence query response unit 130, a communication unit 140, a storage unit 150, and a controller 160. The storage unit 150 has a control terminal ID/password storage unit 151 and an access permission information storage unit 152.

The control terminal authentication unit 110 determines whether the control terminal 200 is authorized to access the surveillance device 300 or not. In response to an access request from the control terminal 200, the control terminal authentication unit 110 uses the control terminal ID/password storage unit 151 to check the ID and password of the control terminal 200 that has made the access request. This allows the authentication for access permission to be performed.

The ticket issuing unit 120 issues a ticket to the control terminal 200 that has been authenticated for access permission by the control terminal authentication unit 110. The ticket is data for accessing the surveillance device 300. The ticket includes a ticket number, and the address of the surveillance device 300 that can be accessed and information on the access permission level. This ticket corresponds to the access permission information of the invention. The information on the address of the surveillance device 300 that can be accessed and on the access permission level is stored in the access permission information storage unit 152 described later in detail.

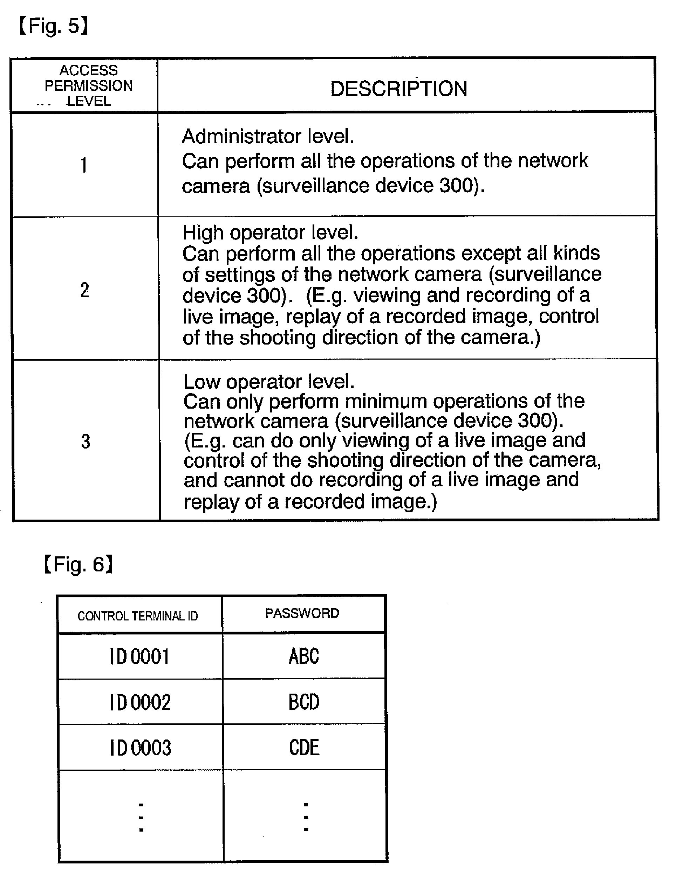

The access permission level here defines in stages the scope within which the control terminal 200 can control the surveillance device 300. This scope corresponds to the scope of device operations of the invention. Figure 5 shows an example of access permission level settings for a case where the surveillance device 300 is a network camera. As shown in Figure 5, the access permission level is set in three levels from Level 1 to Level 3 in the embodiment.

As shown in Figure 5, the highest Level 1 is set as "Administrator level." The scope of device operations (scope of control) of Level 1 is set for an administrator of the surveillance device 300 such that all the operations of the network camera (the surveillance device 300) can be performed. Level 2 in the middle is set as "High operator level." The scope of device operations of Level 2 is set for a high-level operator such that all the operations except all kinds of settings of the network camera can be performed. At this Level 2 can be performed, for example, viewing and recording of a live image, replay of a recorded image, control of the shooting direction of the camera, and the like.

The lowest Level 3 is set as "Low operator level." The scope of device operations of Level 3 is a scope limited for a low-level operator, and is set such that only minimum operations of the network camera can be performed. In the scope of device operations at this Level 3 can be performed, for example, only viewing of a live image of the network camera and control of the shooting direction of the camera. In this way, the scope of control of the surveillance device 300 for the control terminal 200 is set in stages depending on the access permission level, that is, the scope of control of the surveillance device 300 for the control terminal 200 is limited in stages as the level goes down from Level 1 to Level 3.

In response to a query about the existence of the authentication server from the surveillance device 300, the authentication server existence query response unit 130 responds by notifying of the presence or absence of the authentication server 100 concerned. The communication unit 140, under control of the controller 160, transmits and receives data to and from the control terminal 200 and the surveillance device 300. For example, the communication unit 140 receives an access request from the control terminal 200. The communication unit 140 then transmits a ticket, issued by the ticket issuing unit 120, to the control terminal 200 that has been authenticated for access permission. The communication unit 140 also receives a query about the existence of the authentication server from the surveillance device 300, and transmits a response to the query to the surveillance device 300.

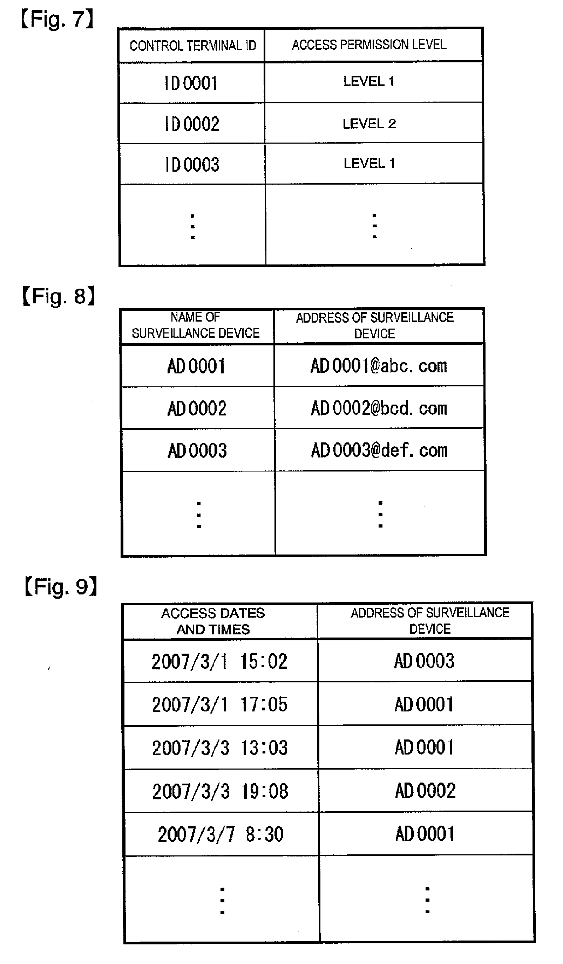

The storage unit 150 stores various data. As described above, the storage unit 150 comprises the control terminal ID/password storage unit 151 and the access permission information storage unit 152. Figure 6 shows an example of information stored in the control terminal ID/password storage unit 151. Figures 7 and 8 show an example of information stored in the access permission information storage unit 152.

As shown in Figure 6, the control terminal ID/password storage unit 151 stores an ID and password of the control terminal 200. The ID and the password are associated with each other. The ID and password of the control terminal 200 are used by the control terminal authentication unit 110 to determine whether the control terminal 200 is authorized to access the surveillance device 300 or not. As described above, the control terminal authentication unit 110 receives an access request from the control terminal 200. The access request includes a control terminal ID, a password, and the name of a surveillance device to be accessed. In response to the access request, the control terminal authentication unit 110 uses the control terminal ID/password storage unit 151 to check the ID and password of the control terminal 200 that has made the access request. This allows the authentication for the access permission to be performed.

As shown in Figure 7, the access permission information storage unit 152 stores the access permission level for each control terminal 200. The access permission level is stored together with the control terminal ID. As shown in Figure 8, the access permission information storage unit 152 stores the address of each surveillance device 300 together with the name of the surveillance device. The information on the access permission level and on the address of the surveillance device is used by the ticket issuing unit 120 to issue a ticket.

When the control terminal authentication unit 110 has authenticated to give the access permission, the controller 160 based on the ID of the control terminal 200 that has been authenticated for the access permission retrieves the access permission level for the relevant control terminal 200 from the access permission information storage unit 152. The controller 160 also retrieves from the access permission information storage unit 152 the address corresponding to the name of the surveillance device to be accessed included in the access request. The ticket issuing unit 120 then issues a ticket by adding a ticket number to the access permission level and the address of the surveillance device that have been retrieved by the controller 160.

The controller 160 controls the whole authentication server 100 including the control terminal authentication unit 110, the ticket issuing unit 120, the authentication server existence query response unit 130, the communication unit 140, and the storage unit 150.

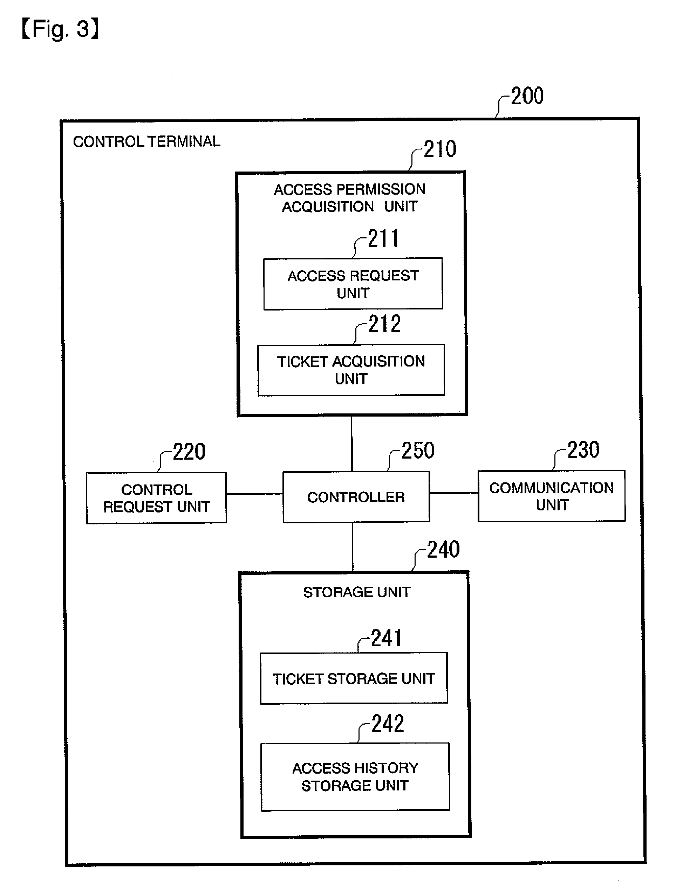

A configuration of the control terminal 200 will next be described with reference to Figure 3. As shown in Figure 3, the control terminal 200 comprises an access permission acquisition unit 210, a control request unit 220, a communication unit 230, a storage unit 240, and a controller 250. The access permission acquisition unit 210 has an access request unit 211 and a ticket acquisition unit 212. The storage unit 240 has a ticket storage unit 241 and an access history storage unit 242.

The access request unit 211 makes an access permission request to the authentication server 100 asking whether the control terminal 200 concerned is authorized to access the surveillance device 300 or not. The control terminal 200 is operated by a user through an operation unit (not shown), and the control terminal ID and the password are inputted together with the name of the surveillance device to be controlled. The control request unit 220 sends the access permission request including the control terminal ID, the password, and the name of the surveillance device to the authentication server 100 via the controller 250 and the communication unit 230.

The ticket acquisition unit 212 acquires a ticket as access permission information from the authentication server 100 if the authentication server 100 determines that the control terminal 200 is authorized to access the surveillance device 300. The ticket is acquired via the communication unit 230 and the controller 250. As described above, the ticket includes a ticket number, and information on the address of the surveillance device 300 that can be accessed and on the access permission level.

The control request unit 220 sends a control request to the surveillance device 300 via the controller 250 and the communication unit 230. The control request includes information on a device control operation (e.g. recording of a live image, and the like) to be requested of the surveillance device 300. The information on a device control operation to be requested of the surveillance device 300 is inputted by a user of the control terminal 200 through the operation unit.

If the ticket acquisition unit 212 has successfully acquired the ticket as access permission information, the control request unit 220 sends the control request with the ticket to the surveillance device 300. This control request is sent to the surveillance device at the address included in the ticket. On the other hand, if the ticket acquisition unit 212 has failed to acquire the ticket, the control request unit 220 sends the control request without the ticket to the surveillance device 300. In this case, an address stored in the below-described access history storage unit 242 is used as the destination address.

The communication unit 230, under control of the controller 250, transmits and receives data to and from the authentication server 100 and the surveillance device 300. For example, the communication unit 230 transmits to the authentication server 100 a request for accessing the surveillance device 300, and receives a ticket from the authentication server 100. The communication unit 230 also transmits a control request to the surveillance device 300, and receives a response thereto from the surveillance device 300.

The storage unit 240 stores various data. As described above, the storage unit 240 comprises the ticket storage unit 241 and the access history storage unit 242. The ticket storage unit 241 stores a ticket acquired by the ticket acquisition unit 212. Specifically, the ticket storage unit 241 stores a ticket number, and information on the address of the surveillance device 300 that can be accessed and on the access permission level.

Figure 9 shows an example of information stored in the access history storage unit 242. As shown in Figure 9, the access history storage unit 242 stores (e.g. several tens of) addresses of the surveillance devices 300 that the control terminal 200 concerned has accessed in the past with the access dates and times as access history. For example, if a response to an access request cannot be acquired from the authentication server 100 and the ticket acquisition unit 212 has failed to acquire a ticket, the access history is used in order to send a control request to the surveillance device 300.

The controller 250 controls the whole control terminal 200 including the access permission acquisition unit 210, the control request unit 220, the communication unit 230, and the storage unit 240.

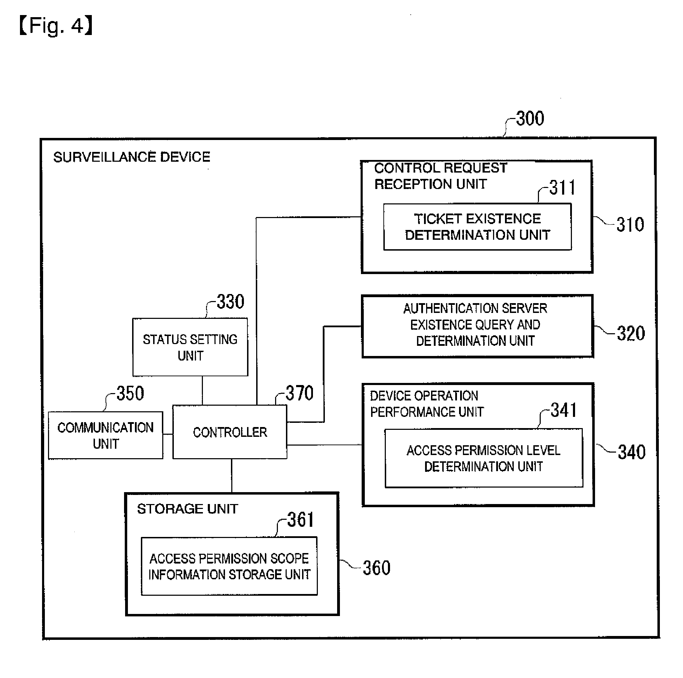

A configuration of the surveillance device 300 will next be described with reference to Figure 4. As show in Figure 4, the surveillance device 300 comprises a control request reception unit 310, an authentication server existence query and determination unit 320, a status setting unit 330, a device operation performance unit 340, a communication unit 350, a storage unit 360, and a controller 370. The control request reception unit 310 has a ticket existence determination unit 311; the device operation performance unit 340 has an access permission level determination unit 341; and the storage unit 360 has an access permission scope information storage unit 361.

The control request reception unit 310 receives a control request sent from the control terminal 200 via the communication unit 350 and the controller 370. The ticket existence determination unit 311 of the control request reception unit 310 determines whether there is a ticket as access permission information in the control request received by the control request reception unit 310 or not.

The authentication server existence query and determination unit 320 queries the authentication server 100 about the existence of the authentication server 100 concerned. The authentication server existence query and determination unit 320 determines that the authentication server is present if there is a response from the authentication server 100, and determines that the authentication server is absent if there is no response from the authentication server 100.

The status setting unit 330 sets a status of the authentication server to an "authentication server present state" or an "authentication server absent state," depending on a result of the determination made by the ticket existence determination unit 311 on the presence or absence of the ticket, and on a result of the query made by the authentication server existence query and determination unit 320. The setting process performed by the status setting unit 330 will be described below.

Suppose that when the authentication server status has already been set to the authentication server present state by the status setting unit 330, a control request is received with a ticket and the ticket existence determination unit 311 determines that there is a ticket. In this case, the status setting unit 330 keeps the setting to the authentication server present state. Suppose that when the status has already been set to the authentication server absent state by the status setting unit 330, a control request is received without a ticket and the ticket existence determination unit 311 determines that there is no ticket. In this case, the status setting unit 330 keeps the setting to the authentication server absent state.

On the other hand, suppose that when the status has already been set to the authentication server present state by the status setting unit 330, a control request is received without a ticket and the ticket existence determination unit 311 determines that there is no ticket. In this case, the authentication server existence query and determination unit 320 queries about the existence of the authentication server 100, and determines the presence or absence of the authentication server 100. Based on the determination result, the status setting unit 330 updates the status of the existence of the authentication server.

Suppose that when the status has already been set to the authentication server absent state by the status setting unit 330, a control request is received with a ticket and the ticket existence determination unit 311 determines that there is a ticket. In this case, the authentication server existence query and determination unit 320 queries about the existence of the authentication server 100, and determines the presence or absence of the authentication server 100. Based on the determination result, the status setting unit 330 updates the status of the existence of the authentication server.

In this way, the setting of the status of the existence of the authentication server 100 set by the status setting unit 330 can be accurately reset according to the actual state. A contradiction can be prevented between the setting of the status of the existence of the authentication server 100 and the result of the determination of the presence or absence of the ticket.

The device operation performance unit 340 performs operations of various functions associated with the surveillance device 300 (an operation of the surveillance device 300 is hereinafter referred to as a device operation). Depending on a control request from the control terminal 200, the device operation performance unit 340 performs a device operation at the access permission level determined by the below-described access permission level determination unit 341.

The access permission level determination unit 341 determines the access permission level at which the device operation performance unit 340 performs a device operation, depending on a result of the determination made by the ticket existence determination unit 311 on the presence or absence of a ticket, and on the status of the existence of the authentication server set by the status setting unit 330 (this access permission level is hereinafter referred to as the at-performance-time access permission level).

If the status is set to the authentication server present state and the control request is with a ticket, the access permission level determination unit 341 sets the at-performance-time access permission level according to the ticket. In this case, the device operation is performed within a predetermined normal scope. On the other hand, if the status is set to the authentication server absent state and the control request is received without a ticket, the access permission level determination unit 341 forcefully sets the level to the lowest Level 3. In this case, the device operation is performed within a limited scope as compared to the normal scope. If the setting of the status of the existence of the authentication server 100 differs from the result of the determination of the presence or absence of the ticket, the above-described updating of the status setting is carried out and then the level is determined depending on the presence or absence of the ticket.

The communication unit 350, under control of the controller 370, transmits and receives data to and from the control terminal 200 and the authentication server 100. For example, the communication unit 350 receives a control request from the control terminal 200, and transmits a response to the control terminal 200, responding to the control request. The communication unit 350 also transmits a query to the authentication server 100 about the existence of the authentication server, and receives a response thereto from the authentication server 100.

The storage unit 360 stores various data. As described above, the storage unit 360 has the access permission scope information storage unit 361. The access permission scope information storage unit 361 stores access permission scope information for each level as shown in Figure 5. Based on the level determined by the access permission level determination unit 341, the device operation performance unit 340 refers to the access permission scope information storage unit 361 and performs the device operation.

The controller 370 controls the whole surveillance device 300 including the control request reception unit 310, the authentication server existence query and determination unit 320, the status setting unit 330, the device operation performance unit 340, the communication unit 350, and the storage unit 360.

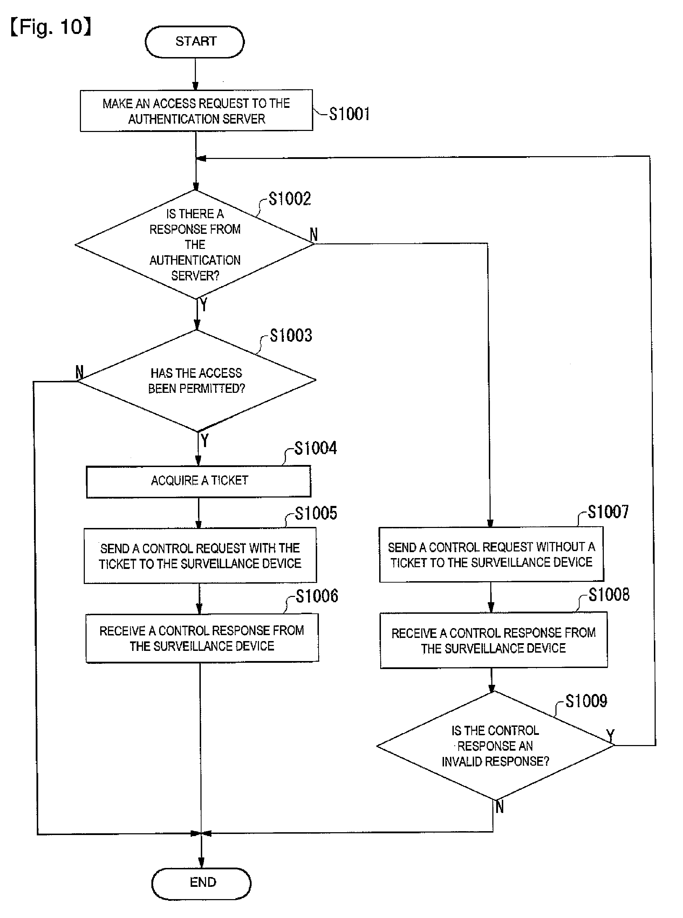

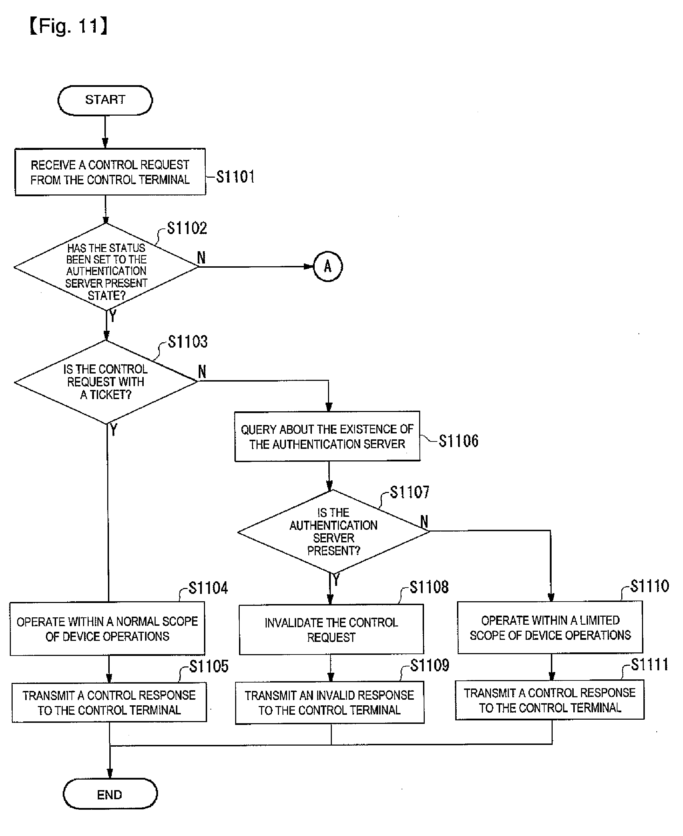

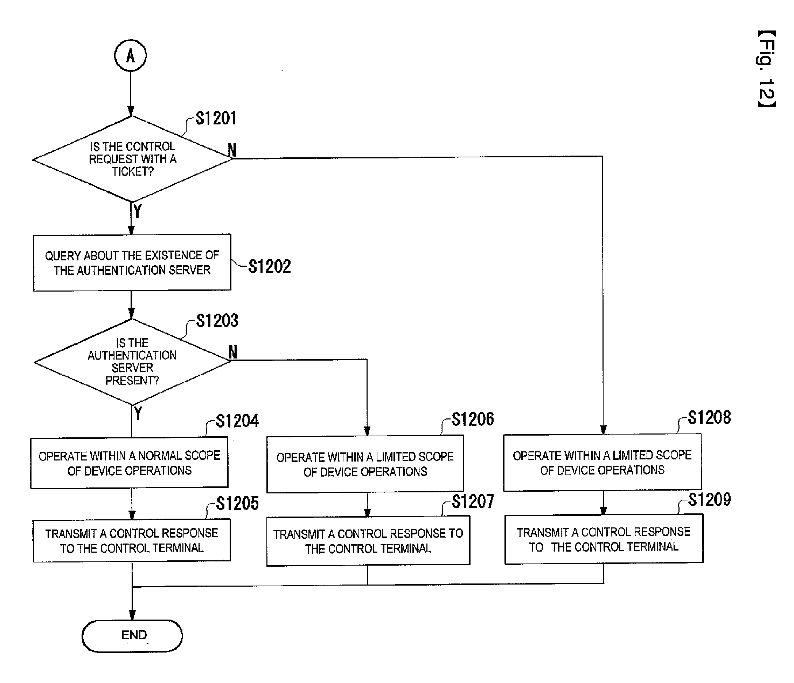

Now, an operation of the surveillance device control system of the embodiment will be described with reference to drawings. Figure 10 shows a flow of an operation of the control terminal, and Figures 11 and 12 show a flow of an operation of the surveillance device. Suppose here that the control terminal 200 belongs to Level 1 in Figure 5 and specifically is the control terminal of the terminal ID 0001 shown in Figures 6 and 7. Suppose also that the surveillance device 300 is the surveillance device of the address AD 0001 shown in Figures 8 and 9.

First, an operation of the control terminal 200 will be described with reference to Figure 10. A user of the control terminal 200 first uses the operation unit (not shown) to operate the control terminal 200. At this time, the control terminal ID (e.g. ID 0001) and the password (e.g. ABC) are inputted with the name of the surveillance device. When the control terminal ID, the password, and the name of the surveillance device are inputted, the access request unit 211 makes an access permission request via the controller 250 and communication unit 230 to the authentication server 100 asking whether the control terminal 200 concerned is authorized to access the surveillance device 300 or not (S1001).

If there is a response to the authentication request from the authentication server 100 (S1002), the control terminal 200 determines whether the access has been permitted or not depending on the presence or absence of a ticket (S1003). If the access has not been permitted (No at S1003), the process is terminated. If the access has been permitted (Yes at S1003), the ticket acquisition unit 212 acquires a ticket as access permission information (S1004). The ticket acquired by the ticket acquisition unit 212 is then stored in the ticket storage unit 241.

The control request unit 220 then sends a control request with the ticket via the controller 250 and communication unit 230 to the surveillance device 300 (S1005). The surveillance device 300 then operates depending on the control request from the control terminal 200, and sends a control response to the control terminal 200. The communication unit 230, under control of the controller 250, then receives the control response from the surveillance device 300 (S1006), and the process is terminated.

If there is no response to the authentication request from the authentication server 100 (No at S1002), the ticket acquisition unit 212 cannot acquire a ticket. In this case, the control request unit 220 sends a control request without a ticket via the controller 250 and communication unit 230 to the surveillance device 300 (S1007). The control request unit 220 retrieves the address of the surveillance device 300 (e.g. AD 0001) from the access history stored in the access history storage unit 242, and sends the control request without a ticket to the retrieved address.

The communication unit 230, under control of the controller 250, then receives a control response from the surveillance device 300 (S1008). Suppose here that a query from the surveillance device 300 side to the authentication server 100 indicates that the authentication server is present though the control request has been sent without a ticket from the control terminal 200 to the surveillance device 300. In this case, an invalid response is returned from the surveillance device 300. So, the control terminal 200 determines whether the control response is an invalid response or not (S1009).

If the control response is not invalid at the step S1009, the process is terminated. If the control response is invalid, the process is returned to S1002 and the steps thereafter are performed again. When the control response is an invalid response, information indicating that the control request from the control terminal 200 is invalid is, for example, displayed on a display unit (not shown), and is provided to the user of the control terminal 200 concerned.

An operation of the surveillance device 300 will next be described with reference to Figures 11 and 12. The control request reception unit 310 first receives a control request sent from the control terminal 200, via the communication unit 350 and the controller 370 (S1101). Then, whether the authentication server status has been set to the authentication server present state by the status setting unit 330 or not is determined (S1102). If the status has been set to the authentication server present state by the status setting unit 330 (Yes at S1102), the ticket existence determination unit 311 determines whether there is a ticket in the control request from the control terminal 200 or not (S1103).

If there is a ticket in the control request from the control terminal 200 (Yes at S1103), the status setting unit 330 keeps the authentication server present state and at the same time the device operation performance unit 340 performs a device operation within a normal scope of device operations preset for the control terminal 200 of ID 0001 (S1104). Specifically, if there is a ticket in the control request from the control terminal 200, the access permission level determination unit 341 sets the access permission level to Level 1 according to the ticket, and the device operation performance unit 340 performs a device operation within the scope of device operations corresponding to Level 1. The communication unit 350, under control of the controller 370, then transmits a control response to the control terminal 200 (S1105), and the process is completed.

On the other hand, if there is no ticket in the control request from the control terminal 200 (No at S1103), the authentication server existence query and determination unit 320 queries the authentication server 100 about the existence thereof (S1106). If there is a response from the authentication server 100, the authentication server existence query and determination unit 320 determines that the authentication server is present (Yes at S1107), and the status setting unit 330 keeps the authentication server present state. In this case, the control request from the control terminal 200 is invalidated (S1108). The communication unit 350, under control of the controller 370, transmits an invalid response as a control response to the control terminal 200 (S1109), and the process is completed.

In this way, if the control terminal 200 arbitrarily makes a control request to the surveillance device 300 though the control terminal 200 does not have a ticket when the status is set to the authentication server present state, the surveillance device 300 side invalidates the control request. Consequently, an unauthorized control request based on so-called spoofing can reliably be checked, and an unauthorized system operation can reliably be restrained.

The spoofing refers to, for example, acting on a network pretending someone else, that is, doing wrong and attributing it to the person by stealing confidential information that can normally be accessed only by the person or by performing a device operation that can normally be controlled only by the person, or the like.

At the step S1107, if there is no response from the authentication server 100, the authentication server existence query and determination unit 320 determines that the authentication server is absent (No at S1107), and the status setting unit 330 updates the status setting of the authentication server 100 to the authentication server absent state. The device operation performance unit 340 then performs a device operation within a limited scope of device operations as compared to the normal scope for the control terminal 200 of ID 0001 (S1110).

Specifically, the access permission level determination unit 341 forcefully determines the at-performance-time access permission level to be Level 3. The device operation performance unit 340 performs a device operation within the scope of device operations corresponding to Level 3, according to the information stored in the access permission scope information storage unit 361 (S1110). The communication unit 350, under control of the controller 370, then transmits a control response to the control terminal 200 (S1111), and the process is completed.

A case where the authentication server status has been set to the authentication server absent state by the status setting unit 330 at the step S1102 will next be described with reference to Figure 12. Also in the case where the status has been set to the authentication server absent state by the status setting unit 330 (No at S1102), the ticket existence determination unit 311 determines whether there is a ticket as access permission information in the control request from the control terminal 200 or not (S1201).

If there is a ticket in the control request from the control terminal 200 (Yes at S1201), the authentication server existence query and determination unit 320 queries the authentication server 100 about the existence thereof (S1202). If there is a response from the authentication server 100, the authentication server existence query and determination unit 320 determines that the authentication server is present (Yes at S1203), and the status setting unit 330 updates the status setting of the authentication server to the authentication server present state.

The device operation performance unit 340 then performs a device operation within the normal scope of device operations preset for the control terminal 200 of ID 0001 (S1204). Specifically, the access permission level determination unit 341 determines the at-performance-time access permission level to be Level 1 according to the ticket, and the device operation performance unit 340 performs a device operation within the scope of device operations corresponding to Level 1, according to the information stored in the access permission scope information storage unit 361. The communication unit 350, under control of the controller 370, then transmits a control response to the control terminal 200 (S1205), and the process is completed.

If there is no response from the authentication server 100 and the authentication server existence query and determination unit 320 determines that the authentication server is absent at the step S1203, the status setting unit 330 keeps the status setting of the authentication server to the authentication server absent state. The device operation performance unit 340 then performs a device operation within a limited scope of device operations as compared to the normal scope set for the control terminal 200 of ID 0001 (S1206).

Specifically, the access permission level determination unit 341 forcefully determines the at-performance-time access permission level to be Level 3. The device operation performance unit 340 performs a device operation within the scope of device operations corresponding to Level 3, according to the information stored in the access permission scope information storage unit 361. The communication unit 350, under control of the controller 370, then transmits a control response to the control terminal 200 (S1207), and the process is completed.

If there is no ticket in the control request from the control terminal 200 at the step S1201, the status setting unit 330 keeps the status setting of the authentication server to the authentication server absent state. The device operation performance unit 340 then performs a device operation within a limited scope of device operations as compared to the normal scope set for the control terminal 200 of ID 0001 (S1208).

Specifically, the access permission level determination unit 341 forcefully determines the at-performance-time access permission level to be Level 3. The device operation performance unit 340 performs a device operation within the scope of device operations corresponding to Level 3, according to the information stored in the access permission scope information storage unit 361. The communication unit 350, under control of the controller 370, then transmits a control response to the control terminal 200 (S1209), and the process is completed.

There has been described a surveillance device control system according to an embodiment of the invention. In the embodiment, if the control terminal 200 has failed to acquire a ticket, it sends a control request without a ticket to the surveillance device 300. The surveillance device 300 operates depending on the control request from the control terminal 200 and, when the surveillance device 300 receives the control request without a ticket, the surveillance device 300 performs a device operation within a limited scope of device operations as compared to when it receives the control request with a ticket.

Consequently, even if the authentication server 100 has gone down and the control terminal 200 cannot be connected to the authentication server 100 and cannot acquire a ticket from the authentication server 100, the surveillance device 300 can receive the control request from the control terminal 200, limit the scope of device operations, and perform the device operation. As a result, the system operation can be continued between the control terminal 200 and the surveillance device 300 even if the authentication server 100 has gone down and cannot authenticate the control terminal 200 to give it access permission.

Using a result of a query about the existence of the authentication server in addition to the presence or absence of the access permission information in the control request, the surveillance device 300 can reliably set the status of the existence of the authentication server 100 and change the scope of device operations depending on the presence or absence of the authentication server.

If the control request is received without a ticket when the status is set to the authentication server present state, the existence of the authentication server 100 is queried about, and then the setting of the status of the existence of the authentication server 100 is updated depending on the result of the query. This allows the setting of the status of the existence of the authentication server 100 to be accurately reset according to the actual state so as to prevent a contradiction between the setting of the status of the existence of the authentication server 100 and the result of the determination of the presence or absence of a ticket (the access permission information). Then, the system operation can be continued between the control terminal 200 and the surveillance device 300.

Suppose that, as above, the control request is received without a ticket when the status is set to the authentication server present state. Suppose further that the existence of the authentication server is queried about and the result indicates that the authentication server is present. In this case, in the embodiment, the surveillance device 300 invalidates the control request. This allows an unauthorized control request to be suitably handled. The unauthorized action here is the control terminal 200 arbitrarily making a control request to the surveillance device though the control terminal 200 does not have the access permission information when the status is set to the authentication server present state. In this case, the above-described configuration allows the surveillance device side to invalidate the control request. Consequently, an unauthorized control request based on so-called spoofing can be invalidated.

If the control request is received with a ticket when the status is set to the authentication server absent state, the existence of the authentication server 100 is queried about, and then the setting of the status of the existence of the authentication server 100 is updated depending on the result of the query. This allows the setting of the status of the existence of the authentication server 100 to be accurately reset according to the actual state so as to prevent a contradiction between the setting of the status of the existence of the authentication server 100 and the result of the determination of the presence or absence of a ticket (the access permission information). Then, the system operation can be continued between the control terminal 200 and the surveillance device 300.

The control terminal 200 has the access history storage unit 242 for storing history information on accessing the surveillance device 300. If the control terminal 200 has failed to acquire a ticket from the authentication server 100, the control terminal 200 sends a control request to the surveillance device 300 based on the access history information. Consequently, even if the authentication server 100 has gone down and the control terminal 200 cannot be connected to the authentication server 100 and cannot obtain the address of the surveillance device 300 from the authentication server 100, the control terminal 200 can use the address in the access history information to send the control request to the surveillance device 300.

As a result, the system operation can be continued between the control terminal 200 and the surveillance device 300 even if the authentication server 100 has gone down and cannot authenticate the control terminal 200 to give it access permission.

In the above-described embodiment, the authentication server existence query and determination unit 320 queries the authentication server 100 about the existence thereof when the control request reception unit 310 receives a control request, depending on the presence or absence of a ticket. Alternatively, the authentication server existence query and determination unit 320 may query about the existence of the authentication server 100 by regularly polling the authentication server 100.

The surveillance device 300 may be provided with a timer (not shown). At S1110, S1206, and S1208 in Figures 11 and 12, the device operation performance unit 340 may perform a device operation within a limited scope of device operations as compared to the normal scope for a certain period of time and then stop the performance.

While there has been described what are at present considered to be preferred embodiments of the invention, it will be understood that various modifications and variations may be made thereto, and it is intended that appended claims cover all such modifications and variations as fall within the true spirit and scope of the invention.

### Industrial applicability

As stated above, the invention has an advantage of being able to continue the system operation between the control terminal and the surveillance device even if the authentication server has gone down and cannot authenticate the control terminal to give it access permission. The invention is useful to a surveillance device control system having a surveillance device such as a network camera, a control terminal for controlling the surveillance device, and an authentication server for determining whether the control terminal is authorized to access the surveillance device or not, or the like.

## Claims

1. A surveillance device control system having a surveillance device, a control terminal for controlling the surveillance device, and an authentication server for determining whether the control terminal is authorized to access the surveillance device or not,
the control terminal having:
an access permission acquisition unit for making an access permission request to the authentication server for permission for the control terminal to access the surveillance device, and acquiring access permission information from the authentication server if the authentication server determines that the control terminal is authorized to access; and
a control request unit for sending a control request with the access permission information to the surveillance device if the access permission acquisition unit has successfully acquired the access permission information, and sending the control request without the access permission information to the surveillance device if the access permission acquisition unit has failed to acquire the access permission information,
the surveillance device having:
a control request reception unit for receiving the control request from the control request unit, and determining the presence or absence of the access permission information; and
a device operation performance unit for performing a device operation depending on the control request,
wherein if the control request reception unit receives the control request without the access permission information, the device operation performance unit performs the device operation within a limited scope of device operations as compared to when the control request reception unit receives the control request with the access permission information.

2. The surveillance device control system according to claim 1, wherein the surveillance device has:
an authentication server existence query unit for querying about the existence of the authentication server; and
a status setting unit for setting a status to an authentication server present state or an authentication server absent state, based on a result of the determination made by the control request reception unit on the presence or absence of the access permission information, and on a result of the query made by the authentication server existence query unit about the existence of the authentication server, and
wherein the device operation performance unit changes the scope of device operations depending on the presence or absence of the access permission information and on the status of the existence of the authentication server set by the status setting unit.

3. The surveillance device control system according to claim 2, wherein if the status is set to the authentication server absent state by the status setting unit, the device operation performance unit performs the device operation within a limited scope of device operations as compared to when the status is set to the authentication server present state by the status setting unit.

4. The surveillance device control system according to claim 2, wherein if the presence or absence of the access permission information in the control request differs from the presence or absence of the authentication server in the status setting, the status setting unit updates the status setting depending on a result of a query about the existence of the authentication server, and
wherein the device operation performance unit performs the device operation within the scope of device operations that depends on the presence or absence of the access permission information and the updated status setting.

5. The surveillance device control system according to claim 4, wherein if the control request reception unit receives the control request without the access permission information when the status is set to the authentication server present state by the status setting unit, the authentication server existence query unit queries about the existence of the authentication server and the status setting unit updates the status setting depending on a result of the query made by the authentication server existence query unit about the existence of the authentication server.

6. The surveillance device control system according to claim 5, wherein if the result of the query made by the authentication server existence query unit indicates the presence of the authentication server, the surveillance device invalidates the control request.

7. The surveillance device control system according to claim 4, wherein if the control request reception unit receives the control request with the access permission information when the status is set to the authentication server absent state by the status setting unit, the authentication server existence query unit queries about the existence of the authentication server and the status setting unit updates the status setting depending on a result of the query made by the authentication server existence query unit about the existence of the authentication server.

8. The surveillance device control system according to claim 1, wherein the control terminal has an access history storage unit for storing history information on accessing the surveillance device, and
wherein if the access permission acquisition unit has failed to acquire the access permission information, the control request unit sends the control request to the surveillance device based on the access history information.

9. A control terminal provided to be able to be connected to a surveillance device to be controlled and an authentication server for determining whether the control terminal is authorized to access the surveillance device or not, the control terminal having:
an access permission acquisition unit for making an access permission request to the authentication server for permission for the control terminal to access the surveillance device, and acquiring access permission information from the authentication server if the authentication server determines that the control terminal is authorized to access; and
a control request unit for sending a control request with the access permission information to the surveillance device if the access permission acquisition unit has successfully acquired the access permission information, and sending the control request without the access permission information to the surveillance device if the access permission acquisition unit has failed to acquire the access permission information.

10. A surveillance device provided to be able to be connected to a control terminal and an authentication server for determining whether the control terminal is authorized to access the surveillance device or not and sending access permission information to the control terminal if the authentication server determines that the control terminal is authorized to access, the surveillance device having:
a control request reception unit for receiving a control request from the control terminal, and determining the presence or absence of the access permission information; and
a device operation performance unit for performing a device operation depending on the control request,
wherein the control request reception unit receives the control request with the access permission information if the control terminal has successfully acquired the access permission information, and receives the control request without the access permission information if the control terminal has failed to acquire the access permission information, and
wherein if the control request reception unit receives the control request without the access permission information, the device operation performance unit performs the device operation within a limited scope of device operations as compared to when the control request reception unit receives the control request with the access permission information.

11. A control method for a surveillance device control system having a surveillance device, a control terminal for controlling the surveillance device, and an authentication server for determining whether the control terminal is authorized to access the surveillance device or not, the control method comprising:
making an access permission request from the control terminal to the authentication server for permission for the control terminal to access the surveillance device;
causing the control terminal to acquire access permission information from the authentication server if the authentication server determines that the control terminal is authorized to access;
sending a control request with the access permission information from the control terminal to the surveillance device if the control terminal has successfully acquired the access permission information, and sending the control request without the access permission information from the control terminal to the surveillance device if the control terminal has failed to acquire the access permission information;
determining the presence or absence of the access permission information at the surveillance device when the surveillance device receives the control request from the control terminal; and
performing a device operation at the surveillance device depending on the control request;
wherein when the surveillance device performs the device operation, if the surveillance device receives the control request without the access permission information, the surveillance device performs the device operation within a limited scope of device operations as compared to when the surveillance device receives the control request with the access permission information.
